# EUROPÄISCHE PATENTSCHRIFT

(11) **EP 2 260 554 B1**
(45) Veröffentlichungstag und Bekanntmachung des Hinweises auf die Patenterteilung: **30.11.2011**
(21) Anmeldenummer: 09728148.9
(22) Anmeldetag: 03.04.2009
(51) Int. Cl.: H02G 3/06

(54) **ZUGENTLASTUNG FÜR DRÄHTE**
STRAIN RELIEF FOR WIRES
DISPOSITIF POUR DIMINUER LA TENSION EXERCÉE SUR DES FILS

(30) Priorität: 03.04.2008 DE 202008004614 U
(43) Veröffentlichungstag der Anmeldung: 15.12.2010
(73) Patentinhaber: Zumtobel Lighting GmbH, 6850 Dornbirn (AT)
(72) Erfinder: FEURLE, Helmut, A-6934 Sulzberg (AT); FRICK, Joachim, A-6833 Klaus (AT); SPIEGEL, Michael, A-6850 Dornbirn (AT)
(74) Vertreter: Thun, Clemens
(86) Internationale Anmeldenummer: PCT/EP2009/002471
(87) Internationale Veröffentlichungsnummer: WO 2009/121621

(56) Entgegenhaltungen:
- FR-A- 1 409 913
- GB-A- 2 146 852
- NL-A- 7 301 383
- US-A- 3 141 062
- US-A- 3 249 687

## Beschreibung

Die vorliegende Erfindung betrifft eine aus zwei zusammenfügbaren Gehäuseteilen bestehende Vorrichtung zur sicheren Halterung von mindestens einem Draht.

Bisher war die Zugentlastung einzelner Drähte nicht zulässig. Stattdessen mussten immer vollständige Kabel in ihrer Gesamtheit zugentlastet werden. Durch Änderungen der entsprechenden Bestimmungen ist es nunmehr möglich auch einzelne Drähte mit Hilfe einer Zugentlastung zu sichern. Siehe zum Beispiel US-A-3249687.

Der vorliegenden Erfindung liegt somit die Aufgabe zugrunde, eine Vorrichtung zu schaffen, mit deren Hilfe auch einzelne Drähte zugentlastet werden können.

Die Aufgabe wird durch eine Vorrichtung gemäß Anspruch 1 gelöst. Vorteilhafte Weiterbildungen der Erfindung sind Gegenstand der abhängigen Ansprüche.

Erfindungsgemäß ist nun eine Vorrichtung zur sicheren Halterung von mindestens einem Draht vorgesehen, die aus zwei zusammenfügbaren Gehäuseteilen besteht, welche im zusammengefügten Zustand den mindestens einen Draht klemmend halten. Eines der beiden Gehäuseteile weist dabei eine zentrale Wand auf, die als Anlagefläche für den mindestens einen Draht dient. Das andere Gehäuseteil weist einander gegenüberliegende Wände auf, die im zusammengefügten Zustand der Gehäuseteile parallel zu der zentralen Wand verlaufen. Dabei wird eine schleifen- oder wellenförmige Führung für den mindestens einen Draht gebildet.

Durch die erfindungsgemäße Vorrichtung ist es nunmehr möglich, dass auch einzelne Drähte zugentlastet werden können. Somit ist es nicht mehr nötig, dass immer vollständige Kabel in ihrer Gesamtheit zugentlastet werden müssen. Stattdessen können je nach Verwendungszweck auch nur einzelne Drähte zugentlastet werden. Bei dem mindestens einen Draht kann es sich also insbesondere um einen unisolierten, insbesondere metallischen, Draht handeln, also um einen Draht ohne isolierende Ummantelung.

Vorteilhaft sind die zwei einander gegenüberliegenden Wände des anderen Gehäuseteils derart ausgebildet, dass sie im zusammengefügten Zustand der Gehäuseteile mit Bezug auf eine durch die zentrale Wand festgelegte Ebene gegenüberliegend angeordnet sind, so dass dadurch die schleifen- oder wellenförmige Führung für den mindestens einen Draht gebildet ist. Weiterhin vorteilhaft ist die Vorrichtung dabei derart ausgebildet, dass die zentrale Wand und die beiden Wände im zusammengefügten Zustand der Gehäuseteile eine Ebene durchsetzen, die senkrecht zu der zentralen Wand verläuft. Hierdurch ist eine Überlappung der drei genannten Wände gebildet, die eine besonders starke Krümmung des mindestens einen Drahtes im eingeklemmten Zustand bewirkt. Die zentrale Wand ist dabei also zumindest teilweise zwischen den beiden Wänden des anderen Gehäuseteils angeordnet. Die Halterung ist damit besonders sicher.

Gemäß einer vorteilhaften Weiterbildung der Erfindung weist eine Stirnseite der zentralen Wand Ausnehmungen, insbesondere Klemmausnehmungen für den bzw. die zu haltenden Drähte auf. Auch an den Stirnseiten der beiden Wände des weiteren Gehäuseteils können Ausnehmungen ausgebildet sein. Die Form der Ausnehmungen kann insbesondere an die Querschnittformen der einzuklemmenden Drähte angepasst sein.

Vorteilhafterweise sind die beiden Gehäuseteile miteinander verrastbar, wobei eines der beiden Gehäuseteile an Seitenwänden eine Außenverzahnung und das andere Gehäuseteil an den entsprechenden Seitenwänden eine Innenverzahnung aufweist. Hierdurch ist eine einfache Verwendung der Vorrichtung ohne den aufwändigen Einsatz von Werkzeug möglich. Die Außenverzahnung kann vorteilhaft mehrere Zähne oder Zahnreihen aufweisen. Entsprechendes gilt für die Innenverzahnung. Hierdurch lässt sich die Stärke der Klemmkraft besser regulieren.

Insbesondere kann das Gehäuseteil, das die zentrale Wand aufweist, an Seitenwänden eine Innenverzahnung aufweisen und das andere Gehäuseteil eine entsprechende Außenverzahnung. Dies ermöglicht eine besonders kompakte Bauform. Vorteilhaft kann dabei die Innenverzahnung - mit Bezug auf eine durch die zentrale Wand festgelegte Ebene - zu beiden Seiten dieser Ebene angeordnet sein. Hierdurch wird im zusammengefügten Zustand ein besonders zuverlässiger Halt der beiden Gehäuseteile ermöglicht.

Des Weiteren können die beiden Gehäuseteile im getrennten Zustand über einen flexiblen Bügel miteinander verbunden sein, wodurch ein unbeabsichtigtes Verlieren eines der beiden Teile vermieden werden kann.

Gemäß einer weiteren vorteilhaften Weiterbildung der Erfindung kann an einem der beiden Gehäuseteile eine Befestigungsvorrichtung zur Halterung an einem anderen Objekt, insbesondere an einem elektronischen Bauteil angeordnet sein.

Stattdessen können sich gemäß einer letzten vorteilhaften Weiterbildung der Erfindung die beiden Gehäuseteile aber auch am Eckpunkt eines L-förmigen Grundgehäuses befinden, welches zur Aufnahme von Akkumulatoren und Betriebsgeräten für Lampen vorgesehen ist. Hierbei sind die beiden Gehäuseteile an der Vorrichtung derart angeordnet, dass einzelne Drähte, welche als elektrische Verbindung zwischen den Akkumulatoren und den Betriebsgeräten vorgesehen sind, sicher gehalten werden können.

Nachfolgend soll die Erfindung anhand der beiliegenden Zeichnungen näher erläutert werden. Es zeigen:
- Figur 1: Darstellung einer erfindungsgemäßen Vorrichtung in drei unterschiedlichen Ansichten;
- Figur 2: Darstellung eines L-förmigen Grundgehäuses zur Aufnahme von Akkumulatoren und Betriebsgeräten in Verbindung mit der erfindungsgemäßen Vorrichtung in zwei Ansichten.
- Fig. 3a: eine weitere Ansicht des in Fig. 1 gezeigten Ausführungsbeispiels mit eingelegten Drähten,
- Fig. 3b: eine Darstellung wie in Fig. 3a, jedoch ohne Drähte,
- Fig. 4a: einen zu der Darstellung aus Fig. 3a korrespondierenden Querschnitt,
- Fig. 4b: einen zu der Darstellung aus Fig. 3b korrespondierenden Querschnitt,
- Fig. 5: einen Querschnitt durch die in Fig. 4b gezeigte Linie V-V, und
- Fig. 6: einen Querschnitt durch das in Fig. 2 gezeigte Ausführungsbeispiel.

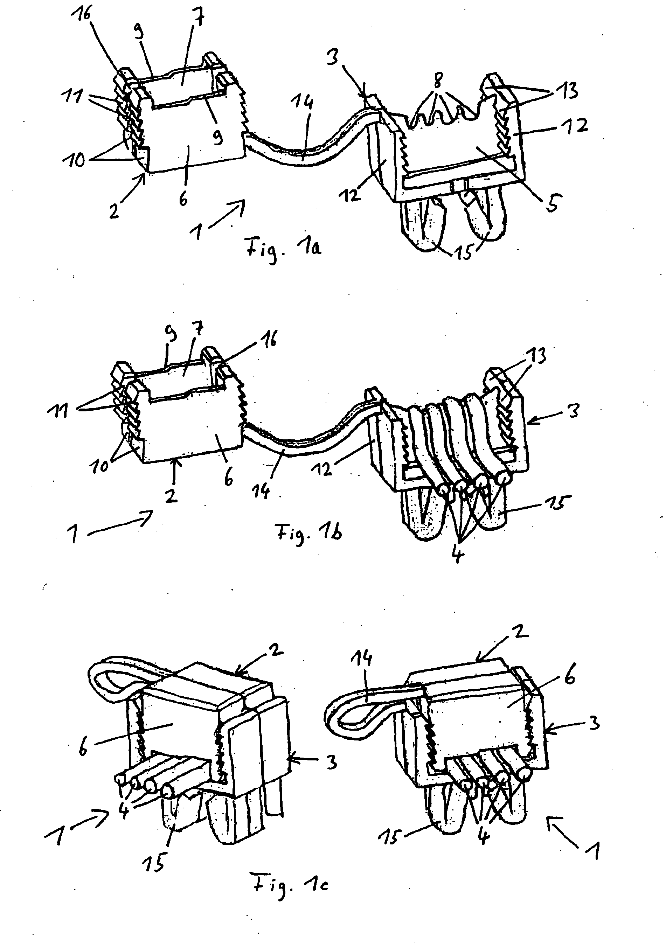

Die in Figur 1 gezeigte erfindungsgemäße Vorrichtung 1 besteht aus zwei Gehäuseteilen 2 und 3, die über einen flexiblen Bügel 14 miteinander verbunden sind. Hierbei zeigen die Figuren 1a und 1b jeweils eine Vorrichtung 1 mit noch nicht ineinander gesteckten Gehäuseteile 2 und 3. Die Figur 1c hingegen zeigt eine Vorrichtung 1, bei der die Gehäuseteile 2 und 3 dann zusammengefügt sind. Bei den Figuren 1b und 1c sind zusätzlich noch einzelne Drähte 4, die durch die Vorrichtung 1 zugentlastet werden sollen, dargestellt.

Das eine Gehäuseteil 3, das auch als Unterteil der Vorrichtung angesehen werden kann, ist im Wesentlichen U-förmig ausgestaltet, wobei die Seitenwände 12 eine zur Innenseite weisende Verzahnung 13 aufweisen. Die Verzahnung 13 dient zur Verrasterung des Unterteils 3 mit dem anderen Gehäuseteil 2, das auch als Oberteil der Vorrichtung angesehen werden kann. Des Weiteren weist das Unterteil 3 eine mittig in der U-Form sitzende, bis zu den Seitenwänden 12 erstreckende zentrale Wand 5 auf, die an ihrer Stirnseite, welche sich zur Öffnung der U-Form hin erstreckt, Klemmausnehmungen 8 entsprechend der Form der zu haltenden einzelnen Drähte 4 hat.

Das eine Gehäuseteil 3 bzw. Unterteil kann also zwei U-Schenkel aufweisen, die durch eine Basis miteinander verbunden sind. Die zentrale Wand 5 kann sich dabei mit Bezug auf die Basis wenigstens bis zur halben Höhe, vorzugsweise wenigstens bis zu drei Vierteln der Höhe der beiden U-Schenkel erstrecken.

Wie aus Fig. 1a hervorgeht, können die Seitenwände 12 des Gehäuseteils 3 bzw. des Unterteils durch die beiden U-Schenkel gebildet sein. Vorteilhaft ist die Verzahnung 13 jeweils zu beiden Seiten der zentralen Wand 5 angeordnet; mit Bezug auf die Darstellung der Fig. 1a kann die Verzahnung 13 also vor und hinter der zentralen Wand 5 angeordnet sein. Dies ermöglicht einen besonders zuverlässigen gegenseitigen Halt der beiden Gehäuseteile 2, 3. Es kann also insbesondere vorgesehen sein, dass die nach innen weisende Verzahnung 13 des Unterteils 3 an zumindest einem der beiden U-Schenkel zu beiden Seiten der zentralen Wand 5 verläuft. Die nach innen weisende Verzahnung 13 kann insbesondere mehrere Zähne bzw. Zahnreihen umfassen. Hierdurch wird eine bessere Regulierung der Klemmkraft ermöglicht.

An der Unterseite 3 der erfindungsgemäßen Vorrichtung 1 befinden sich ferner entsprechende Clips bzw. Schnappfüßen 15, mit deren Hilfe die Vorrichtung 1 werkzeuglos an einem anderen Objekt, beispielsweise einem entsprechenden Gehäuse oder einem elektronischen Bauteil befestigt werden kann.

Das Oberteil 2 ist derart geformt, dass es in die U-Form des Unterteils 3 der erfindungsgemäßen Vorrichtung 1 eingesetzt werden kann. Hierzu weist das Oberteil 2 zwei gegenüberliegende mit einer Außenverzahnung 11 versehene Seitenwände 10 auf, die jeweils mit zwei einander gegenüberliegenden Wänden 6 und 7 verbunden sind, wobei die Wände 6 und 7 an den Stirnseiten Ausnehmungen 9 für die Drähte 4 aufweisen.

Die Außenverzahnung 11 kann insbesondere mehrere Zähne bzw. Zahnreihen umfassen. Hierdurch wird eine bessere Regulierung der Klemmkraft ermöglicht.

Vorteilhaft sind die zentrale Wand 5 und die beiden gegenüberliegenden Wände 6, 7 derart ausgebildet, dass sie sich im zusammengefügten Zustand der Gehäuseteile 2, 3 zumindest teilweise überlappen. Hierdurch wird eine besonders starke Krümmung des Drahtes bzw. der Drähte im eingeklemmten Zustand erzielt. Die drei Wände 5, 6, 7 durchsetzen in diesem Fall also eine Ebene, die senkrecht zu der der zentralen Wand 5 verläuft. Es kann insbesondere vorgesehen sein, dass die zentrale Wand 5 und die beiden gegenüberliegenden Wände 6, 7 im zusammengefügten Zustand der beiden Gehäuseteile 2, 3 eine Ebene durchsetzen, die senkrecht zu den beiden U-Schenkeln des Unterteils 3 verläuft.

Beim Aufsetzen des Oberteils 2 auf das Unterteil 3 greift die Außenverzahnung 11 der Seitenwände 10 des Oberteils 2 in die Innenverzahnung 13 der Seitenwände 12 des Unterteils 3 ein, wodurch die beiden Gehäuseteile 2 und 3 miteinander verrasten. Um ein Aufsetzen des Oberteils 2 auf das Unterteil 3 zu ermöglichen, weisen die Seitenwände 10 des Oberteils 2 der erfindungsgemäßen Vorrichtung 1 ferner noch mittig angeordnete Schlitze 16 entsprechend der zentrale Wand 5 des Unterteils 3 auf.

Bevor jedoch das Oberteil 2 auf das Unterteil 3 gesetzt wird, werden noch die zu sichernden einzelnen Drähte 4 in die hierfür vorgesehenen Ausnehmungen 8 eingelegt. Im Anschluss daran wird das Oberteil 2 auf das Unterteil 3 der erfindungsgemäßen Vorrichtung 1 aufgesetzt und anschließend eingedrückt. Hierdurch werden die Drähte 4 derart verformt, dass sie anschließend in einer Wellen- bzw. Schleifenform über die zentrale Wand 5 geführt sind. Durch die Wellen- bzw. Schleifenform der Drähte 4 ist ein Nachziehen bzw. ein Bewegen der Drähte 4 bei aufgesetzten und eingedrückten Oberteil 3 nicht mehr möglich.

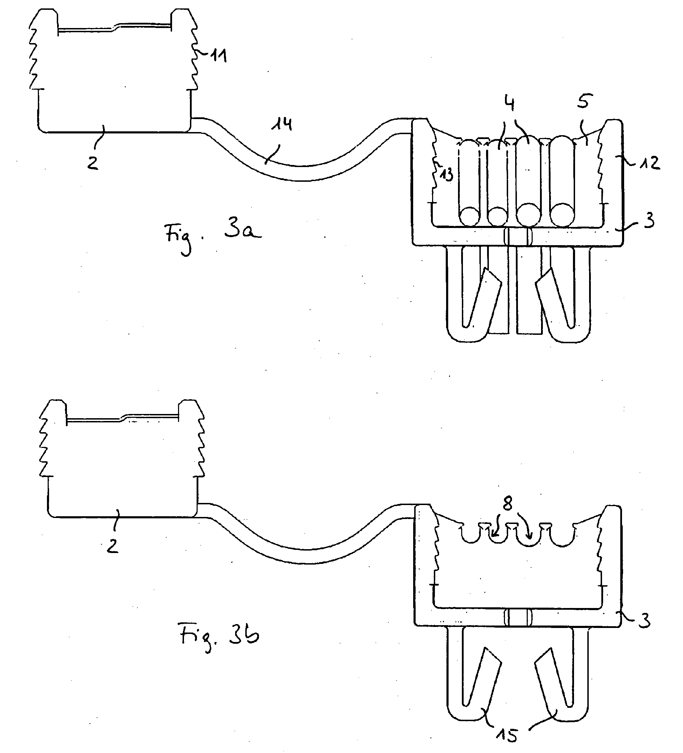

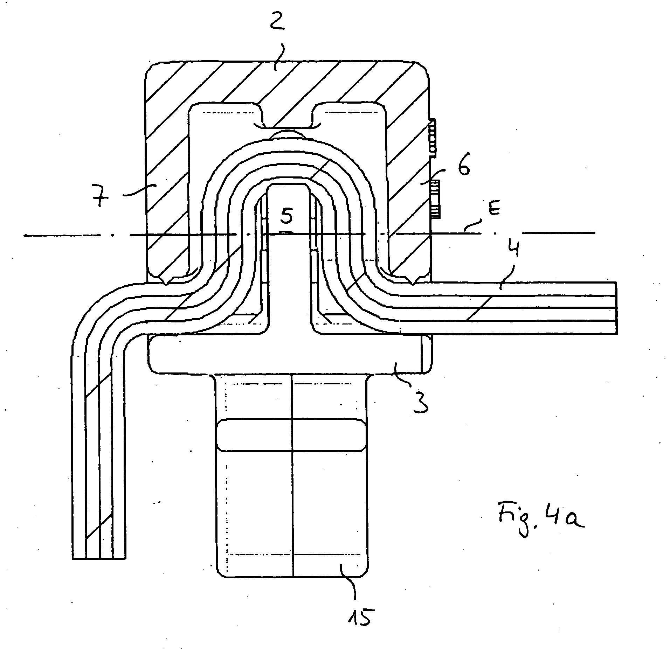

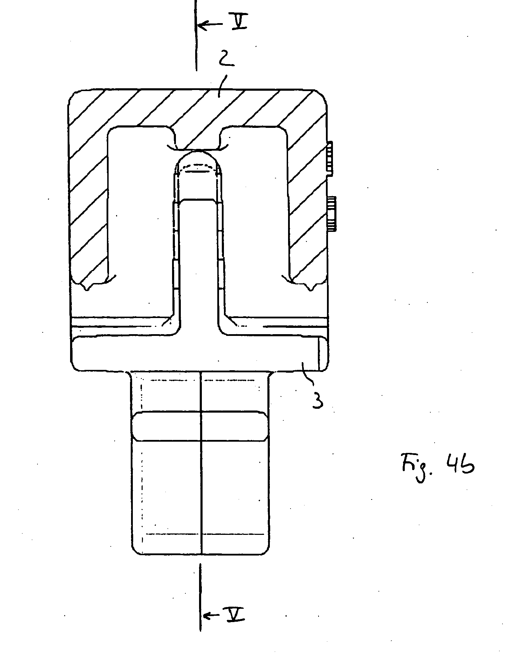

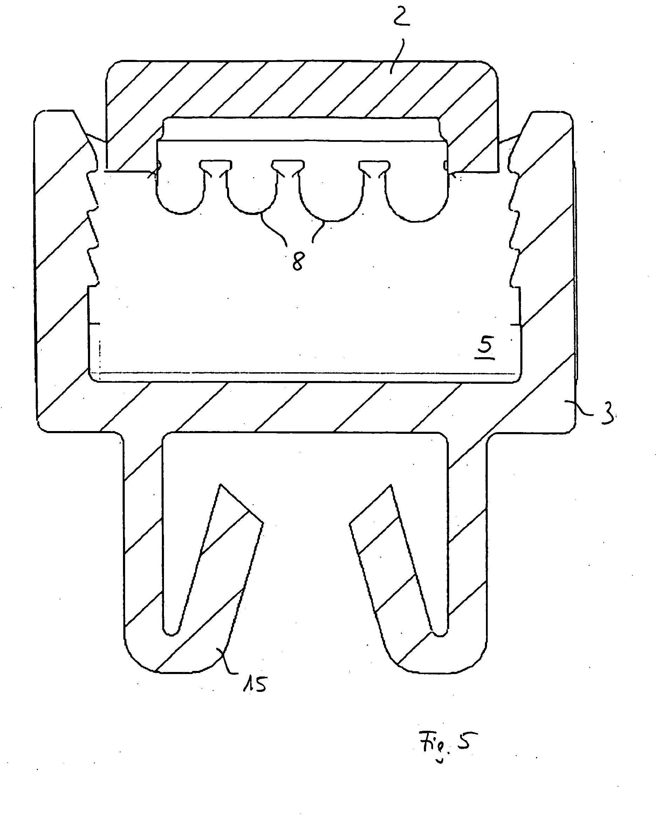

In den Figuren 3 bis 5 sind weitere Darstellungen des Ausführungsbeispiels gezeigt. In den Figuren 3a und 4a sind die einzuklemmenden Drähte 4 dargestellt, die Figuren 3b, 4b und 5 zeigen die Vorrichtung ohne die Drähte 4. Wie aus den Ansichten der Figuren 3a und 3b hervorgeht, können an der zentralen Wand 5 beispielsweise vier Ausnehmungen 8 für vier einzuklemmende Drähte 4 vorgesehen sei. Dabei können sich die Ausnehmungen 8 in ihrer Größe unterscheiden, so dass sie für unterschiedlich große Drähte geeignet sind.

Aus Fig. 4a ist gut ersichtlich, dass die drei Wände 5, 6, 7, also die zentrale Wand 5 und die beiden Wände 6, 7 des anderen Gehäuseteils 2, im zusammengefügten Zustand der Gehäuseteile 2, 3 derart einander überlappen, dass sie eine Ebene durchsetzen, die zur zentralen Wand 5 senkrecht verläuft. In der Darstellung der Fig. 4a ist beispielhaft eine solche Ebene E skizziert.

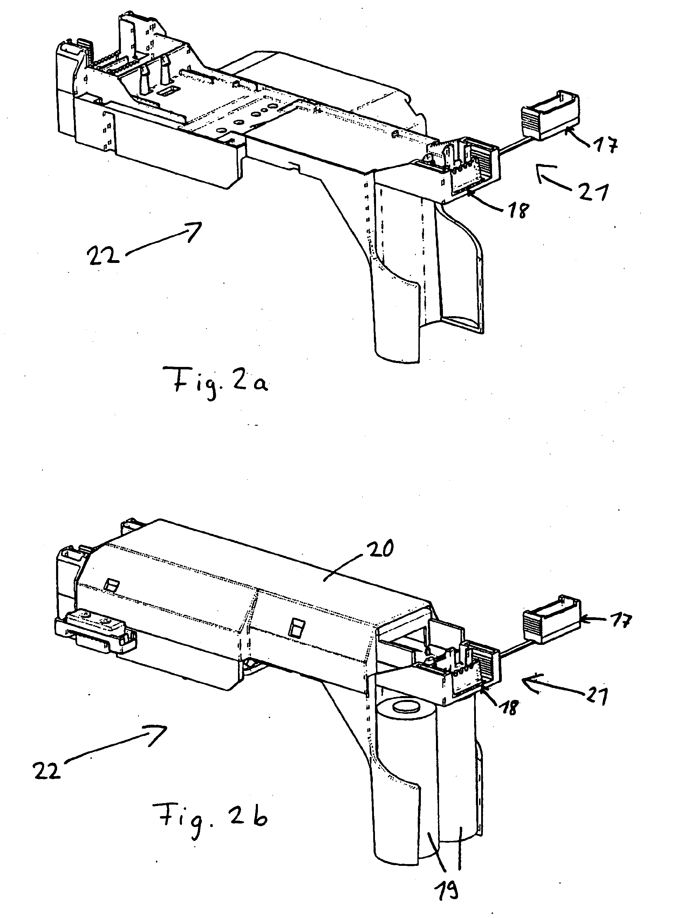

Figur 2 zeigt hingegen eine Ausführungsform der vorliegenden Erfindung bei der die erfindungsgemäße Vorrichtung 21 sich am Eckpunkt eines L-förmigen Grundgehäuses 22 befindet. Das L-förmige Grundgehäuse 22 ist hierbei zur Aufnahme von Akkumulatoren 19 und von Betriebsgeräten für Lampen vorgesehen. Ein Betriebsgerät wird hierbei an der Außenseite des langen Schenkels des L-förmigen Grundgehäuses 22 angebracht und mit einer Abdeckung 20 versehen. An dem kurzen Schenkel des L-förmigen Grundgehäuses 22 sind ebenfalls an der Außenseite Akkumulatoren 19 angebracht. Die Akkumulatoren 19 sind hierbei über einzelne nicht dargestellte Drähte mit dem Betriebsgerät verbünden, wobei die Drähte mit der an dem Eckpunkt des L-förmigen Grundgehäuses 22 befindlichen erfindungsgemäßen Vorrichtung 21 zugentlastet werden.

Die erfindungsgemäße Vorrichtung 21 weist hier wiederum zwei Gehäuseteile 17 und 18 auf, die wie bereits in Figur 1 beschrieben miteinander verrasten. Im Gegensatz zur Figur 1 jedoch weisen die Seitenwände des Oberteils 17 keine Schlitze auf, da die zentrale Wand des Unterteils 18 nicht vollständig bis an die Seitenteile des Unterteils 18 ragt. Die Funktion der erfindungsgemäßen Vorrichtung 21 unterscheidet sich jedoch nicht von der erfindungsgemäßen Vorrichtung 1 aus Figur 1. So werden die in den Klemmausnehmungen der zentralen Wand befindlichen Drähte durch das Aufsetzen und Eindrücken des Oberteils 17 zu einer Welle bzw. Schleife geformt, wodurch die Drähte in einer Wellenform über die zentrale Wand geführt sind.

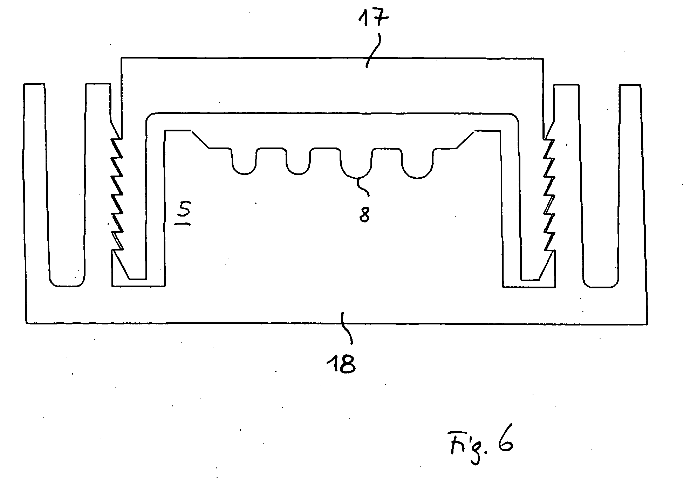

In Fig. 6 ist ein Querschnitt des in Fig. 2 gezeigten Ausführungsbeispiels gezeigt.

Durch die Ausgestaltung der erfindungsgemäßen Vorrichtung 1 und 21 wird auf engstem Raum somit eine Zugentlastung für Drähte geschaffen, die einfach und insbesondere ohne den Einsatz von Werkzeugen betätigt werden kann.

## Patentansprüche

1. Vorrichtung (1,21) zur sicheren Halterung von mindesten einem Draht (4), aufweisend zwei zusammenfügbare Gehäuseteile (2, 3, 17, 18), welche im zusammengefügten Zustand den mindestens einen Draht (4) klemmend halten, wobei eines der beiden Gehäuseteile (3, 18) eine zentrale Wand (5) aufweist, welche eine Anlagefläche für den mindestens einen Draht (4) aufweist, und wobei das andere Gehäuseteil (2,17) zwei einander gegenüberliegende Wände (6, 7) aufweist, welche im zusammengefügten Zustand der Gehäuseteile (2, 3, 17, 18) parallel zu der zentralen Wand (5) verlaufen, derart, dass eine schleifen- oder wellenförmige Führung für den mindestens einen Draht (4) gebildet ist,
**dadurch gekennzeichnet,**
**dass** das Gehäuseteil (3, 18), welches die zentrale Wand (5) aufweist, im wesentlichen U-förmig ausgebildet ist und die zentrale Wand (5) sich zwischen den beiden Seitenwänden (12) des Gehäuseteils (3, 18), die durch die beiden U-Schenkel gebildet sind, erstreckt.

2. Vorrichtung nach Anspruch 1,
**dadurch gekennzeichnet,**
**dass** an einer Stirnseite der zentralen Wand (5) Ausnehmungen, insbesondere Klemmausnehmungen (8) für den bzw. die zu haltenden Drähte (4) ausgebildet sind.

3. Vorrichtung nach Anspruch 1 oder 2,
**dadurch gekennzeichnet,**
**dass** an den Stirnseiten der beiden Wände (6, 7) des weiteren Gehäuseteils (2, 17) Ausnehmungen (9) ausgebildet sind.

4. Vorrichtung nach einem der vorherigen Ansprüche,
**dadurch gekennzeichnet,**
**dass** die beiden Gehäuseteile (2, 3, 17, 18) miteinander verrastbar sind.

5. Vorrichtung nach Anspruch 4,
**dadurch gekennzeichnet,**
**dass** eines der beiden Gehäuseteile (2, 17) an Seitenwänden (10) eine Außenverzahnung (11) und das andere Gehäuseteil (3, 18) an entsprechenden Seitenwänden (12) eine Innenverzahnung (13) aufweist.

6. Vorrichtung nach einem der vorherigen Ansprüche,
**dadurch gekennzeichnet,**
**dass** die beiden Gehäuseteile (2, 3, 17, 18) im getrennten Zustand über einen Bügel (14) miteinander verbunden sind.

7. Vorrichtung (1) nach einem der vorherigen Ansprüche,
**dadurch gekennzeichnet,**
**dass** an einem der beiden Gehäuseteile (3) eine Befestigungsvorrichtung (15) zur Halterung an einem anderen Objekt, insbesondere an einem elektronischen Bauteil angeordnet ist.

8. Vorrichtung (21) nach einem Ansprüche 1-6,
**dadurch gekennzeichnet,**
**dass** sich die beiden Gehäuseteile (17,18) am Eckpunkt eines L-förmigen Grundgehäuses (22) befinden, welches zur Aufnahme von Akkumulatoren (19) und von Betriebsgeräten für Lampen vorgesehen ist, wobei die beiden Gehäuseteile (17, 18) der Vorrichtung (21) derart angeordnet sind, dass einzelne Drähte, welche als elektrische Verbindung zwischen den Akkumulatoren (19) und Betriebsgeräten vorgesehen sind, sicher gehalten werden können.

## Claims

1. Apparatus (1, 21) for securely holding at least one wire (4), comprising two housing parts (2, 3, 17, 18) that can be joined together and in the joined state hold the at least one wire (4) in a clamped manner, wherein one of the two housing parts (3, 18) comprises a central wall (5) that has a lay-on surface for the at least one wire (4), and wherein the other housing part (2, 17) comprises two mutually opposite walls (6, 7) that in the joined state of the housing parts (2, 3, 17, 18) extend parallel to the central wall (5) in such a way as to form a loop- or wave-shaped guide for the at least one wire (4),
**characterized in that**
the housing part (3, 18) that comprises the central wall (5) is of a substantially U-shaped configuration and the central wall (5) extends between the two side walls (12) of the housing part (3, 18) that are formed by the two limbs of the U.

2. Apparatus according to claim 1,
**characterized in that**
recesses, in particular clamping recesses (8), for the wire or wires (4) that are to be held are formed in an end of the central wall (5).

3. Apparatus according to claim 1 or 2,
**characterized in that**
recesses (9) are formed in the ends of the two walls (6, 7) of the further housing part (2, 17).

4. Apparatus according to one of the preceding claims, **characterized in that**
the two housing parts (2, 3, 17, 18) are latchable to one another.

5. Apparatus according to claim 4,
**characterized in that**
one of the two housing parts (2, 17) at side walls (10) has an external tooth system (11) and the other housing part (3, 18) at corresponding side walls (12) has an internal tooth system (13).

6. Apparatus according to one of the preceding claims,
**characterized in that**
the two housing parts (2, 3, 17, 18) in the separate state are connected to one another by a strap (14).

7. Apparatus (1) according to one of the preceding claims,
**characterized in that**
disposed on one of the two housing parts (3) is a fastening apparatus (15) for mounting on another article, in particular on an electronic component.

8. Apparatus (21) according to one claims 1-6,
**characterized in that**
the two housing parts (17, 18) are situated on the corner point of an L-shaped basic housing (22) that is provided for receiving batteries (19) and operating equipment for lamps, wherein the two housing parts (17, 18) of the apparatus (21) are disposed in such a way that individual wires, which are provided as an electrical connection between the batteries (19) and operating equipment, may be held securely.

## Revendications

1. Dispositif (1, 21) pour la fixation sûre d'au moins un fil métallique (4), présentant deux parties de boîtier (2, 3, 17, 18) pouvant être assemblées qui fixent par serrage à l'état assemblé au moins un fil métallique (4), sachant que l'une des deux parties de boîtier (3, 18) présente une paroi centrale (5) qui comporte une surface d'appui pour au moins un fil métallique (4), et sachant que l'autre partie de boîtier (2, 17) présente deux parois (6, 7) opposées qui s'étendent à l'état assemblé des parties de boîtier (2, 3, 17, 18) parallèlement à la paroi centrale (5), de telle manière qu'un guidage en forme de bande ou d'onde soit formé pour au moins un fil métallique (4), **caractérisé en ce que** la partie de boîtier (3, 18) qui présente la paroi centrale (5) est réalisée sensiblement en forme de U et la paroi centrale (5) s'étend entre les deux parois latérales (12) de la partie de boîtier (3, 18) qui sont formées par les deux branches en U.

2. Dispositif selon la revendication 1, **caractérisé en ce que** des évidements, en particulier des évidements de serrage (8) sont réalisés pour le ou les fils métalliques à fixer (4) sur un côté frontal de la paroi centrale (5).

3. Dispositif selon la revendication 1 ou 2, **caractérisé en ce que** des évidements (9) sont réalisés sur les côtés frontaux des deux parois (6, 7) de l'autre partie de boîtier (2, 17).

4. Dispositif selon l'une quelconque des revendications précédentes, **caractérisé en ce que** les deux parties de boîtier (2, 3, 17, 18) peuvent être encliquetées ensemble.

5. Dispositif selon la revendication 4, **caractérisé en ce que** l'une des deux parties de boîtier (2, 17) présente une denture extérieure (11) sur des parois latérales (10) et l'autre partie de boîtier (3, 18) présente une denture intérieure (13) sur des parois latérales correspondantes (12).

6. Dispositif selon l'une quelconque des revendications précédentes, **caractérisé en ce que** les deux parties de boîtier (2, 3, 17, 18) sont reliées entre elles à l'état séparé par un étrier (14).

7. Dispositif (1) selon l'une quelconque des revendications précédentes, **caractérisé en ce qu'**un dispositif de fixation (15) est disposé sur l'une des deux parties de boîtier (3) pour la fixation sur un autre objet, en particulier sur un composant électronique.

8. Dispositif (21) selon l'une quelconque des revendications 1 à 6, **caractérisé en ce que** les deux parties de boîtier (17, 18) se situent sur un point d'angle d'un boîtier de base en forme de L (22) qui est prévu pour le logement d'accumulateurs (19) et d'équipements pour des lampes, sachant que les deux parties de boîtier (17, 18) du dispositif (21) sont disposées de telle manière que des fils métalliques individuels prévus comme liaison électrique entre les accumulateurs (19) et les équipements, puissent être fixés de manière sûre.
